# EUROPÄISCHE PATENTANMELDUNG

(11) **EP 4 796 406 A1**
(43) Veröffentlichungstag der Anmeldung: **26.08.2026**
(21) Anmeldenummer: 26155895.1
(22) Anmeldetag: 03.02.2026
(51) Int. Cl.: B60W 40/10, B60W 40/068, B60W 50/14

(54) **VERFAHREN ZUM KLASSIFIZIEREN EINES FAHRZUSTANDS EINES FAHRZEUGS SOWIE FAHRZEUG**

(30) Priorität: 20.02.2025 DE 102025106344
(71) Anmelder: Bayerische Motoren Werke Aktiengesellschaft, 80809 München (DE); Robert Bosch GmbH, 70469 Stuttgart (DE)
(72) Erfinder: Flossmann, Martin, 83607 Waakirchen (DE); Stolle, Karl Ludwig, 71272 Renningen (DE); Wahl, Anja, 71706 Markgröningen (DE)
(74) Vertreter: Hofstetter, Schurack & Partner

(57) **Zusammenfassung**

Die Erfindung betrifft ein Verfahren zum Klassifizieren eines Fahrzustands eines Fahrzeugs (1), bei welchem mittels einer elektronischen Recheneinrichtung (17) ein Ist-Drehmomentwert (46) ermittelt wird, welcher ein aktuelles, in einer Lenkung (24) des Fahrzeugs (1) wirkendes Lenkmoment charakterisiert. Es wird ein Ist-Winkelwert ermittelt, welcher einen aktuellen Rollwinkel des Fahrzeugs (2) charakterisiert. Es wird ein Ist-Geschwindigkeitswert ermittelt, welcher eine aktuelle Fahrgeschwindigkeit des Fahrzeugs (2) charakterisiert und mit dem zugehörigen Ist-Winkelwert ein Ist-Wertepaar bildet. In Abhängigkeit von dem Ist-Wertepaar wird aus einem Referenz-Kennfeld (37), welches mehrere Referenz-Winkelwerte, mehrere Referenz-Geschwindigkeitswerte und mehrere Referenz-Drehmomentwerte umfasst und einem jeweiligen Referenz-Wertepaar, welches genau einen der Referenz-Winkelwerte und genau einen der Referenz-Geschwindigkeitswerte umfasst, genau einen der Referenz-Drehmomentwerte zuordnet, eines der Referenz-Wertepaare als zu dem Ist-Wertepaar gehörendes Wertepaar ausgewählt. Es wird der dem ausgewählten Referenz-Wertepaar zugeordnete Referenz-Drehmomentwert (50) ermittelt.

## Beschreibung

Die Erfindung betrifft ein Verfahren zum Klassifizieren eines Fahrzustands eines Fahrzeugs. Außerdem betrifft die Erfindung ein Fahrzeug.

Die US 2022/0126833 A1 offenbart ein Verfahren, bei welchem Straßenreibwertinformationen empfangen werden, die Straßenreibungsschätzungen für mehrere Bereiche, die ein Fahrzeug umgeben, angeben. Aus der US 10 773 725 B1 ist ein Verfahren bekannt, bei welchem unter Nutzung von Sensoren eines Fahrzeuges Bilder ermittelt werden, die eine vor dem Fahrzeug angeordnete Fahrbahn zeigen. Der US 2018/0037234 A1 ist ein Verfahren zum Schätzen von Reibkoeffizienten eines Rads eines Fahrzeugs in Bezug auf eine darunterliegende Oberfläche als bekannt zu entnehmen. Des Weiteren offenbart die DE 10 2009 002 245 A1 ein Verfahren zur Ermittlung des Reibwerts zwischen Reifen und Fahrbahn in einem Fahrzeug. Die EP 2 290 318 B1 offenbart ein Neige-Fahrzeug. Außerdem ist aus der DE 10 2019 210 807 A1 ein Lenksystem für ein Fahrzeug bekannt, mit mindestens einem Sensor zur Ermittlung des Lenkmoments.

Aufgabe der vorliegenden Erfindung ist es, ein Verfahren und ein Fahrzeug zu schaffen, sodass ein Fahrzustand des Fahrzeugs besonders vorteilhaft klassifiziert und somit ermittelt werden kann.

Diese Aufgabe wird erfindungsgemäß durch ein Verfahren mit den Merkmalen des Patentanspruchs 1 sowie durch ein Fahrzeug mit den Merkmalen des Patentanspruchs 15 gelöst. Vorteilhafte Ausgestaltungen der Erfindung sind Gegenstand der abhängigen Ansprüche.

Ein erster Aspekt der Erfindung betrifft ein Verfahren zum Klassifizieren eines, insbesondere aktuellen, Fahrzustands eines vorzugsweise als Kraftfahrzeug ausgebildeten Fahrzeugs, insbesondere während einer Fahrt des Fahrzeugs. Dies bedeutet beispielsweise, dass das Verfahren während der Fahrt des Fahrzeugs durchgeführt wird, welches beispielsweise während der Fahrt entlang eines Untergrunds, insbesondere vorwärts, gefahren wird. Der Untergrund ist oder bildet beispielsweise eine Boden, sodass beispielsweise das Kraftfahrzeug entlang des Bodens gefahren wird. Insbesondere ist oder bildet der Boden beispielsweise eine Fahrbahn. Insbesondere ist das Fahrzeug in Fahrzeughochrichtung nach unten hin an dem Boden abgestützt, während das Fahrzeug entlang des Bodens, das heißt entlang des Untergrunds fährt. Beispielsweise weist das Fahrzeug wenigstens ein einfach auch als Rad bezeichnetes Fahrzeugrad auf, über welches das Fahrzeug insbesondere bei der Fahrt und somit bei dem Verfahren in Fahrzeughochrichtung des Fahrzeugs nach unten hin an dem Untergrund abgestützt ist, sodass das Fahrzeugrad den Untergrund, insbesondere direkt, berührt, das heißt, insbesondere direkt, an dem Boden anliegt. Das Fahrzeugrad ist somit ein Bodenkontaktelement des Fahrzeugs, welches über das Bodenkontaktelement in Fahrzeughochrichtung des Fahrzeugs nach unten hin insbesondere während der Fahrt und somit während des Verfahrens abgestützt ist. Insbesondere umfasst beispielsweise das Fahrzeugrad eine Felge und einen insbesondere separat von der Felge ausgebildeten Reifen, welcher auf die Felge aufgezogen und somit durch die Felge getragen und beispielsweise aus Gummi gebildet ist. Wird das Fahrzeug bei der Fahrt und somit vorzugsweise bei dem Verfahren entlang des Untergrunds gefahren, während das Fahrzeug in Fahrzeughochrichtung des Fahrzeugs nach unten hin über das Bodenkontaktelement an dem Boden abgestützt ist, so rollt das Bodenkontaktelement, insbesondere direkt, an dem Boden, das heißt an dem Untergrund ab, sodass insbesondere der Reifen, insbesondere direkt, an dem Untergrund abrollt. Insbesondere ist das Fahrzeugrad um eine Raddrehachse relativ zu einem Bauelement des Fahrzeugs drehbar an dem Bauelement gehalten, wobei insbesondere vorgesehen ist, dass während des Verfahrens beziehungsweise während der Fahrt das Fahrzeugrad, insbesondere direkt, an dem Untergrund abrollt und sich dabei um die Raddrehachse relativ zu dem Bauelement dreht. Insbesondere handelt es sich bei dem Bauelement um ein beispielsweise als Gabel, insbesondere Vorderradgabel, ausgebildetes Lenkelement einer Lenkung des Fahrzeugs, insbesondere dann, wenn das Fahrzeug beispielsweise als einspuriges Zweirad ausgebildet ist. Dabei ist beispielsweise das Lenkelement um eine auch als Lenkachse bezeichnete Schwenkachse relativ zu einem beispielsweise als Rahmen, insbesondere als Gitterrohrrahmen, ausgebildeten Fahrgestell des Fahrzeugs verschwenkbar an dem Fahrgestell gehalten. Dabei ist das beispielsweise als Vorderrad ausgebildete Fahrzeugrad mit dem Lenkelement um die Lenkachse relativ zu dem Fahrgestell mitverschwenkbar. Durch um die Lenkachse und relativ zu dem Fahrgestell erfolgendes Verschwenken des Lenkelements und somit des Fahrzeugrads kann das Fahrzeug gelenkt werden, mithin können dadurch Kurvenfahrten, Fahrtrichtungsänderungen und Fahrbahn- beziehungsweise Fahrspurwechsel des Fahrzeugs bewirkt werden. Beispielsweise kann eine das Fahrzeug, insbesondere aktuell, nutzende Person, wie beispielsweise eine Fahrerin oder ein Fahrer des Fahrzeugs, das Lenkelement und mit diesem das Fahrzeugrad um die Lenkachse relativ zu dem Fahrgestell verschwenken, um das Fahrzeug zu lenken, mithin um dadurch Kurvenfahrten, Fahrtrichtungsänderungen und Fahrspur- beziehungsweise Fahrbahnwechsel des Kraftfahrzeugs zu bewirken. Hierfür kann beispielsweise die das Fahrzeug insbesondere aktuell nutzende Person mit ihren Händen eine Lenkhandhabe der Lenkung und somit des Fahrzeugs ergreifen, insbesondere umgreifen, sodass die Person über ihre Arme, die die Hände der Person umfassen, eine Kraft oder ein Drehmoment auf die Lenkhandhabe und somit die Lenkung ausüben, mithin in die Lenkhandhabe und somit in die Lenkung einleiten kann. Hieraus resultiert eine auch als Personenmoment oder Personendrehmoment bezeichnetes, durch die Person bewirktes und auf die Lenkung ausgeübtes Drehmoment, welches insbesondere um die Lenkachse wirkt.

Bei dem Verfahren wird mittels einer elektronischen Recheneinrichtung, insbesondere des Fahrzeugs, wenigstens ein Ist-Drehmomentwert ermittelt, welche ein aktuelles, in der Lenkung des Fahrzeugs wirkendes und auch als Lenkdrehmoment bezeichnetes Lenkmoment charakterisiert, das heißt angibt, beschreibt oder definiert. Insbesondere ist beispielsweise das Lenkmoment ein um die Lenkachse wirkendes Drehmoment, welches beispielsweise dadurch in der Lenkung wirkt, dass die Person wie zuvor beschrieben das Personenmoment auf die Lenkung, insbesondere auf das Lenkelement und über das Lenkelement auf die Lenkung, ausübt, sodass beispielsweise das Lenkmoment das Personenmoment ist oder aus dem Personenmoment resultiert. Insbesondere kann sich das Lenkmoment zumindest aus dem Personenmoment und aus einem zusätzlichen, von dem Personenmoment unterschiedlichen Drehmoment, das auch als Lenkmomentanteil oder Lenkmomentenanteil bezeichnet wird, zusammensetzen. Beispielsweise wird mittels einer Messeinrichtung, insbesondere des Fahrzeugs, das in der Lenkung wirkende Lenkmoment erfasst. Dabei stellt beispielsweise die Messeinrichtung ein insbesondere elektrisches Messeinrichtungssignal bereit, wobei beispielsweise die elektronische Recheneinrichtung das Messeinrichtungssignal empfängt. Das Messeinrichtungssignal charakterisiert das mittels der Messeinrichtung erfasste Lenkmoment, sodass beispielsweise das Messeinrichtungssignal den Ist-Drehmomentwert umfasst. Dadurch, dass die elektronische Recheneinrichtung das Messeinrichtungssignal empfängt, ermittelt beispielsweise die elektronische Recheneinrichtung den Ist-Drehmomentwert. Ferner ist es denkbar, dass die elektronische Recheneinrichtung das Messeinrichtungssignal empfängt und in Abhängigkeit von dem empfangenen Messeinrichtungssignal den Ist-Drehmomentwert ermittelt, insbesondere berechnet.

Bei dem Verfahren wird mittels der elektronischen Recheneinrichtung wenigstens ein Ist-Winkelwert ermittelt, welcher einen aktuellen Rollwinkel des Fahrzeugs charakterisiert. Unter Rollen ist eine Bewegung des Fahrzeugs um dessen auch als Längsachse oder Fahrzeuglängsachse bezeichnete Fahrzeuglängsrichtung zu verstehen, die insbesondere entlang einer gedachten Geraden verläuft und beispielsweise durch den auch als Schwerpunkt bezeichneten Massenschwerpunkt des Fahrzeugs hindurchverläuft. Dabei ist der Rollwinkel ein Winkel, um den das Fahrzeug insbesondere bezogen auf eine auch als Neutralstellung bezeichnete Ausgangsstellung, insbesondere aktuell, rollt, mithin um die Längsachse geneigt ist. Grundsätzlich ist es denkbar, dass der aktuelle Rollwinkel und somit beispielsweise der Ist-Winkelwert null sind, sodass sich das Fahrzeug in der genannten Ausgangsstellung befindet, mithin nicht in Fahrzeugquerrichtung gegenüber der Ausgangsstellung geneigt ist, oder aber der aktuelle Rollwinkel ist ein von null unterschiedlicher Winkel, um welchen das Fahrzeug aktuell um die Längsachse insbesondere gegenüber der Neutralstellung geneigt ist, sodass sich das Fahrzeug beispielsweise aktuell um die Längsachse betrachtet in einer von der Neutralstellung unterschiedlichen Neigungsstellung befindet und sodass beispielsweise der Ist-Winkelwert ein von null unterschiedlicher Wert ist. Beispielsweise wird der aktuelle Rollwinkel mittels der elektronischen Recheneinrichtung berechnet. Ferner ist es denkbar, dass der aktuelle Rollwinkel mittels der Messeinrichtung des Fahrzeugs erfasst wird, wobei der Ist-Winkelwert den mittels der Messeinrichtung erfassten, aktuellen Rollwinkel charakterisiert.

Bei dem Verfahren wird mittels der elektronischen Recheneinrichtung, welche auch als Steuergerät bezeichnet wird, wenigstens ein Ist-Geschwindigkeitswert ermittelt, welcher eine aktuelle, einfach auch als Geschwindigkeit bezeichnete Fahrgeschwindigkeit des Fahrzeugs charakterisiert, das beispielsweise insbesondere bei der zuvor genannten Fahrt und somit bei dem Verfahren mit der Fahrgeschwindigkeit, insbesondere vorwärts, fährt. Insbesondere sind die aktuelle Fahrgeschwindigkeit des Fahrzeugs und somit der Ist-Geschwindigkeitswert von null unterschiedlich und insbesondere größer als null, sodass beispielsweise während des Verfahrens, das heißt bei dem Verfahren das Fahrzeug mit der Fahrgeschwindigkeit, insbesondere vorwärts, entlang des Untergrunds fährt oder gefahren wird. Beispielsweise wird die aktuelle Fahrgeschwindigkeit des Fahrzeugs mittels der Messeinrichtung des Fahrzeugs gemessen, das heißt erfasst, sodass beispielsweise der Ist-Geschwindigkeitswert die aktuelle, gemessene Fahrgeschwindigkeit charakterisiert, das heißt angibt, beschreibt oder definiert. Der ermittelte Ist-Winkelwert gehört zu dem ermittelten Ist-Geschwindigkeitswert und umgekehrt, sodass der ermittelte Ist-Winkelwert und der ermittelte Ist-Geschwindigkeitswert ein Ist-Wertepaar bilden. Hierunter ist nicht notwendigerweise zu verstehen, dass die elektronische Recheneinrichtung aus dem Ist-Winkelwert und dem Ist-Geschwindigkeitswert das genannte Ist-Wertepaar bildet, mithin führt die elektronische Recheneinrichtung nicht notwendigerweise einen speziellen Rechenschritt durch, um aus dem Ist-Winkelwert und dem Ist-Geschwindigkeitswert das Ist-Wertepaar zu bilden oder den Ist-Winkelwert und den Ist-Geschwindigkeitswert dem Ist-Wertepaar zuzuordnen oder dergleichen, sondern grundsätzlich werden der ermittelte Ist-Winkelwert und der ermittelte Ist-Geschwindigkeitswert als das genannte Ist-Wertepaar bildende Werte angesehen. Dies ist insbesondere der Fall, um anhand des Begriffs "Ist-Wertepaar" das Verfahren im Weiteren anschaulich und nachvollziehbar beschreiben zu können.

Bei dem Verfahren wird mittels der elektronischen Recheneinrichtung in Abhängigkeit von dem Ist-Wertepaar, das heißt in Abhängigkeit von dem Ist-Winkelwert und in Abhängigkeit von dem Ist-Geschwindigkeitswert aus, insbesondere genau, einem Referenz-Kennfeld, welches mehrere Referenz-Winkelwerte, mehrere Referenz-Geschwindigkeitswerte und mehrere Referenz-Drehmomentwerte umfasst und einem jeweiligen Referenz-Wertepaar, welches genau einen der Referenz-Winkelwerte und genau einen der Referenz-Geschwindigkeitswerte umfasst, genau einen der Referenz-Drehmomentwerte zuordnet, eines der Referenz-Wertepaare als zu dem Ist-Wertepaar gehörendes Wertepaar ausgewählt und somit insbesondere abgerufen wird. Beispielsweise ist das Referenz-Kennfeld ein auch als Referenz-Lenkmomentkennfeld bezeichnetes Lenkmomentkennfeld. Ferner ist beispielsweise das Kennfeld ein für einen Referenz-Reibwert ermitteltes Kennfeld, was im Folgenden noch genauer erläutert wird. Beispielsweise ist der Referenz-Reibwert ein, insbesondere hoher, Reibwert, der beispielsweise einen Grenzwert überschreitet.

Das Referenz-Kennfeld ist insbesondere ein zumindest oder genau dreidimensionales Kennfeld, welches sozusagen die Referenz-Drehmomentwerte über den Referenz-Winkelwerten und über den Referenz-Geschwindigkeitswerten angibt, das heißt beschreibt. Denkbar dabei ist, dass dem jeweiligen Referenz-Drehmomentwert mehrere der Referenz-Wertepaare zugeordnet sind. Denkbar ist ferner, dass der gleiche Referenz-Winkelwert ein Teil mehrerer der Referenz-Wertepaare ist. Ferner ist es denkbar, dass der gleiche Referenz-Geschwindigkeitswert ein Teil mehrerer der Referenz-Wertepaare ist. Unter dem Merkmal, dass das jeweilige Referenz-Wertepaar genau einen der Referenz-Winkelwerte und genau einen der Referenz-Geschwindigkeitswerte umfasst und unter dem Merkmal, dass, insbesondere genau, eines der Referenz-Wertepaare als zu dem Ist-Wertepaar gehörendes Wertepaar ausgewählt wird, muss nicht notwendigerweise verstanden werden, dass die Referenz-Wertepaare, mithin die Referenz-Winkelwerte und die Referenz-Geschwindigkeitswerte als die Referenz-Wertepaare tatsächlich im Referenz-Kennfeld gespeichert und enthalten sind, sondern der Begriff "Referenz-Wertepaar" wird zunächst nur verwendet, um das Verfahren im Folgenden anschaulich und nachvollziehbar beschreiben zu können. Somit ist insbesondere unter dem Merkmal, dass in Abhängigkeit von dem Ist-Wertepaar, mithin in Abhängigkeit von dem Ist-Geschwindigkeitswert und in Abhängigkeit von dem Ist-Winkelwert, insbesondere genau, eines der Referenz-Wertepaare ausgewählt wird, zu verstehen, dass in Abhängigkeit von dem Ist-Wertepaar, mithin in Abhängigkeit von dem Ist-Geschwindigkeitswert und in Abhängigkeit von dem Ist-Winkelwert, insbesondere genau, einer der Referenz-Winkelwerte und, insbesondere genau, einer der Referenz-Geschwindigkeitswerte aus dem Kennfeld ausgewählt und somit abgerufen wird, wobei der ausgewählte Referenz-Winkelwert und der ausgewählte Referenz-Geschwindigkeitswert zu dem ermittelten Ist-Wertepaar, mithin zu dem ermittelten Ist-Winkelwert und zu dem ermittelten Ist-Geschwindigkeitswert gehören und das beispielsweise nur gedachte Referenz-Wertepaar gedanklich bilden.

Mittels der elektronischen Recheneinrichtung wird bei dem Verfahren der dem ausgewählten Referenz-Wertepaar zugeordnete Referenz-Drehmomentwert ermittelt, insbesondere aus dem Referenz-Kennfeld ausgelesen, welches auch einfach als Kennfeld bezeichnet wird. Dies bedeutet, dass mittels der elektronischen Recheneinrichtung in Abhängigkeit von dem ausgewählten Referenz-Winkelwert und in Abhängigkeit von dem ausgewählten Referenz-Geschwindigkeitswert, insbesondere genau, einer der Referenz-Drehmomente ermittelt wird.

Mittels der elektronischen Recheneinrichtung wird der ermittelte Referenz-Drehmomentwert mit dem Ist-Drehmomentwert verglichen, wodurch eine auch als Unterschied bezeichnete Differenz zwischen dem ermittelten Referenz-Drehmomentwert und dem ermittelten Ist-Drehmomentwert ermittelt wird. Diese Differenz wird auch als Abstand des Ist-Drehmomentwerts von dem Kennfeld, das heißt von dem ermittelten Referenz-Drehmomentwert bezeichnet. Mit anderen Worten wird mittels der elektronischen Recheneinrichtung ein Vergleich durchgeführt, bei dem der ermittelte Referenz-Drehmomentwert mit dem ermittelten Ist-Drehmomentwert verglichen wird, wobei durch den Vergleich die genannte Differenz zwischen dem ermittelten Referenz-Drehmomentwert und dem ermittelten Ist-Drehmomentwert ermittelt, insbesondere berechnet, wird.

Zum Klassifizieren des Fahrzustands wird mittels der elektronischen Recheneinrichtung der Fahrzustand in Abhängigkeit von der Differenz, insbesondere genau, einer von mehreren vorgegebenen Klassen zugeordnet, wobei die eine Klasse, der der Fahrzustand zugeordnet wird, um dadurch den Fahrzustand zu klassifizieren, auch als erste Klasse bezeichnet wird. Beispielsweise sind die Klassen in einem, insbesondere elektronischen und/oder elektrischen, Datenspeicher, insbesondere der elektronischen Recheneinrichtung, gespeichert. Durch das erfindungsgemäße Verfahren kann der insbesondere aktuelle Fahrzustand des Fahrzeugs besonders vorteilhaft klassifiziert werden, wodurch eine Grundlage für einen vorteilhaften Betrieb des Fahrzeugs realisiert werden kann. Insbesondere kann bei dem Verfahren vorgesehen sein, dass wenigstens eine Komponente des Fahrzeugs in Abhängigkeit von der Klassifizierung des Fahrzustands betrieben wird. Das von der Klassifizierung des Fahrzustands abhängige Betreiben der Komponente des Fahrzeugs umfasst beispielsweise, dass, insbesondere mittels der Komponente, ein beispielsweise von der das Fahrzeug aktuell nutzenden Person optisch und/oder haptisch und/oder akustisch wahrnehmbares Hinweissignal, insbesondere an eine Umgebung der Komponente ausgegeben wird. Die Komponente ist oder umfasst beispielsweise eine insbesondere elektrische und/oder elektronische Wiedergabeeinrichtung, mittels welcher das Hinweissignal an die Umgebung der Wiedergabeeinrichtung ausgegeben wird. Mittels des Hinweissignals kann beispielsweise der das Fahrzeug nutzenden Person die eine Klasse, der der Fahrzustand zugeordnet wurde oder wird, kommuniziert werden. Hierdurch kann die Person besonders vorteilhaft über den aktuellen Fahrzustand des Fahrzeugs informiert werden. In der Folge kann beispielsweise die Person ihr Fahrverhalten anpassen oder ändern, um hierdurch beispielsweise das Fahrzeug sicher fahren zu können. Das Zuordnen des Fahrzustands zu der einen Klasse wird auch als Einordnen des Fahrzustands in die eine Klasse bezeichnet.

Die eine Klasse, in die der Fahrzustand eingeordnet wird, ist, charakterisiert oder beschreibt beispielsweise einen sicheren Fahrzustand, mithin eine sichere Fahrt, sodass beispielsweise der Person insbesondere durch Ausgeben des Hinweissignals kommuniziert werden kann, dass der aktuelle Fahrzustand des Fahrzeugs ein sicherer, mithin stabiler Fahrzustand ist.

Insbesondere ist es möglich, dass zum Klassifizieren des Fahrzustands der Fahrzustand mittels der elektronischen Recheneinrichtung in Abhängigkeit von der Differenz wahlweise der einen Klasse (erste Klasse) oder einer zweiten der Klassen zugeordnet wird, um dadurch den Fahrzustand zu klassifizieren. Wird der Fahrzustand beispielsweise der zweiten Klasse zugeordnet, mithin in die zweite Klasse eingeordnet, und ist, beschreibt, charakterisiert oder definiert die zweite Klasse beispielsweise eine nahe an einem Grenzbereich des Fahrzeugs erfolgende Fahrt des Kraftfahrzeugs, so kann beispielsweise die Person insbesondere durch Ausgeben des Hinweissignals darüber informiert werden, dass die Person das Fahrzeug aktuell nahe des Grenzbereichs des Fahrzeugs fährt. Dies kann beispielsweise daran liegen, dass eine insbesondere aktuelle Reibung zwischen dem Untergrund und dem Fahrzeugrad und somit ein die aktuelle Reibung zwischen dem Fahrzeugrad und dem Untergrund charakterisierender Reibwert gering sind, insbesondere geringer als der zuvor genannte hohe Reibwert (Referenz-Reibwert). In der Folge kann die Person beispielsweise ihr Fahrverhalten ändern, insbesondere derart, dass sich der aktuelle Fahrzustand des Fahrzeugs derart ändert, dass der aktuelle Fahrzustand des Fahrzeugs nicht mehr der zweiten Klasse, sondern der ersten Klasse zugeordnet wird. Dadurch kann die Person den aktuellen Fahrzustand des Fahrzeugs von einer Fahrt nahe des Grenzbereichs hin zu einer demgegenüber sichereren Fahrt des Fahrzeugs überführen, sodass die Person das Fahrzeug sicher fahren kann.

Der Erfindung liegen insbesondere die folgenden Erkenntnisse und Überlegungen zugrunde: Fährt das Fahrzeug auf dem Untergrund, und herrscht zwischen dem Untergrund und dem Fahrzeugrad eine nur geringe Reibung, mithin ein nur geringer, die geringe Reibung charakterisierender Reibwert, so kann dies durch das Verfahren qualitativ ermittelt werden. Hierfür ist die Voraussetzung für eine besonders vorteilhafte, insbesondere sichere, Fahrt des Fahrzeugs geschaffen.

Ausgangspunkt der Erfindung war zunächst die Annahme, dass bei stationärer Kreisfahrt mit definierter Geschwindigkeit und Schräglage, mithin Rollwinkeln auf unterschiedlichen Reibwerten unterschiedliche Lenkmomente gestellt werden oder wirken müssen, um derselben definierten Kreisbahn zu folgen. Konkret muss auf verringertem Reibwert das Lenkmoment im Vergleich zu einer Fahrt auf demgegenüber höherem Reibwert in Richtung kurveninnen geändert werden. Es wurde jedoch gefunden, dass dieser Effekt bei kleinen Schräglagen, mithin bei kleinen Rollwinkeln gering ist und mit größeren Schräglagen zunimmt. Speziell wenn sich das beispielsweise als Motorrad und somit als einspuriges Zweirad ausgebildete Fahrzeug bei einer Kurvenfahrt auf verringertem Reibwert nahe einer Grenzschräglage für diesen Reibwert befindet und damit den sogenannten linearen Reifenbereich verlässt, wobei die Grenzschräglage beispielsweise eine solche Schräglage oder ein solcher Rollwinkel des Fahrzeugs ist, dass bei Überschreiten der Grenzschräglage durch den aktuellen Rollwinkel des Fahrzeugs das Fahrzeugrad und somit das Fahrzeug relativ zu dem Untergrund rutscht, insbesondere wegrutscht, so unterscheidet sich das zu stellende Lenkmoment deutlich von dem auf demgegenüber höheren Reibwert zu stellenden Lenkmoment. Messungen des Lenkmoments haben gezeigt, dass ein das gemessene Lenkmoment charakterisierendes Signal ein sehr schlechtes Nutz-Rauschsignalverhältnis aufweisen kann, eine solche Messung des Lenkmoments also sehr ungenau sein kann. So kann der Effekt, dass auf niedrigerem Reibwert ein anderes Lenkmoment als auf demgegenüber höheren Reibwert zu stellen ist, erst erkannt werden, wenn eine Differenz eines auf niedrigem Reibwert zu stellenden Lenkmoments im Vergleich zu einem auf demgegenüber höheren Reibwert zu stellenden Lenkmoment ausreichend groß ist. Daher ermittelt das erfindungsgemäße Verfahren nun nicht einen eine aktuelle Reibung zwischen dem Fahrzeugrad und dem Untergrund charakterisierenden Reibwert, sondern das erfindungsgemäße Verfahren klassifiziert den Fahrzustand, sodass beispielsweise dann und insbesondere genau dann, wenn es nötig ist, eine Fahrt des Kraftfahrzeugs nahe am Grenzbereich oder nahe des Grenzbereichs, mithin eine Fahrt des Kraftfahrzeugs auf einem solchen Untergrund erkannt werden kann, dass zwischen dem Untergrund und dem Fahrzeugrad eine nur geringe Reibung, mithin ein nur geringer Reibwert herrscht, welcher beispielsweise geringer als ein Niveauwert ist. Ein Vorteil des erfindungsgemäßen Verfahrens ist, dass das genannte Lenkmomentkennfeld, welches beispielsweise für den hohen Reibwert ermittelt wurde, ausreicht, um den Fahrzustand zu klassifizieren und somit zu ermitteln. Unter dem im Rahmen des erfindungsgemäßen Verfahrens durchführbaren oder durchgeführten Klassifizieren des Fahrzustands ist ein Ermitteln des insbesondere aktuellen Fahrzustands des Fahrzeugs zu verstehen, da durch das Klassifizieren des Fahrzustands der Fahrzustand qualitativ ermittelt oder bewertet wird.

Um den Fahrzustand besonders vorteilhaft klassifizieren und somit einen besonders vorteilhaften Betrieb des Fahrzeugs realisieren zu können, ist es bei einer Ausführungsform der Erfindung vorgesehen, dass mittels der elektronischen Recheneinrichtung in Abhängigkeit von wenigstens einer mittels einer Erfassungseinrichtung des Fahrzeugs gemessenen und durch den Fahrzustand beeinflussten Messgröße wenigstens ein den Fahrzustand charakterisierender Zustandswert ermittelt wird, wobei zum Klassifizieren des Fahrzustands der Fahrzustand auch in Abhängigkeit von dem Zustandsparameter der einen Klasse zugeordnet wird.

Dabei hat es sich zur Realisierung eines besonders vorteilhaften Betriebs als besonders vorteilhaft gezeigt, wenn zum Klassifizieren des Fahrzustands dann, wenn der Zustandsparameter einen ersten Wert aufweist und die Differenz, insbesondere gleichzeitig, kleiner als ein vorgegebener Schwellenwert ist, der Fahrzustand der einen Klasse zugeordnet wird. Die eine Klasse wird auch als erste Klasse bezeichnet oder ist eine erste der Klassen. Zum Klassifizieren des Fahrzustands wird dann, wenn der Zustandsparameter den ersten Wert aufweist und, insbesondere gleichzeitig, die Differenz größer oder gleich dem vorgegebenen Schwellenwert ist, der Fahrzustand der von der ersten Klasse unterschiedlichen, zweiten der Klassen zugeordnet. Zum Klassifizieren des Fahrzustands wird mittels der elektronischen Recheneinrichtung dann, wenn der Zustandsparameter einen von dem ersten Wert unterschiedlichen zweiten Wert aufweist, der Fahrzustand unabhängig von der Differenz, das heißt unabhängig davon, ob die Differenz kleiner, größer oder gleich dem vorgegebenen Schwellenwert ist, einer von der ersten Klasse und von der zweiten Klasse unterschiedlichen, dritten der Klassen zugeordnet. Weist somit der Zustandsparameter den ersten Wert auf, so bedeutet dies, dass hinreichend genau zwischen der ersten Klasse und der zweiten Klasse unterschieden werden kann, und zwar in Abhängigkeit von der Differenz. Weist jedoch der Zustandsparameter den zweiten Wert auf, so ist beispielsweise eine Unterscheidung zwischen der ersten Klasse und der zweiten Klasse nicht möglich, sodass dann beispielsweise nicht hinreichend genau ermittelt werden kann, ob der aktuelle Fahrzustand des Fahrzeugs einer sicheren Fahrt des Fahrzeugs oder einer Fahrt des Fahrzeugs nahe des Grenzbereichs entspricht. Hierdurch können Fehlinformationen des Fahrers vorteilhaft vermieden werden, sodass ein besonders vorteilhafter Betrieb des Fahrzeugs darstellbar ist.

Eine weitere Ausführungsform zeichnet sich dadurch aus, dass die Messgröße die Fahrgeschwindigkeit umfasst oder charakterisiert. Alternativ oder zusätzlich umfasst oder charakterisiert die Messgröße den auch als Schräglage bezeichneten Rollwinkel. Alternativ oder zusätzlich ist oder umfasst die Messgröße eine zeitliche Ableitung des Rollwinkels, wobei die zeitliche Ableitung des Rollwinkels auch als Rollrate bezeichnet wird. Alternativ oder zusätzlich ist oder umfasst die Messgröße eine auch als Längsbeschleunigung bezeichnete, in Fahrzeuglängsrichtung des Fahrzeugs verlaufende Beschleunigung des Fahrzeugs. Alternativ oder zusätzlich ist oder umfasst die Messgröße eine auch als Querbeschleunigung bezeichnete, in Fahrzeugquerrichtung des Fahrzeugs verlaufende Beschleunigung des Fahrzeugs. Hierdurch kann besonders vorteilhaft entschieden werden, ob sich der aktuelle Fahrzustand eignet oder nicht, den Fahrzustand zu klassifizieren. Die Messgröße ist, umfasst oder charakterisiert somit wenigstens ein Fahrdynamiksignal, mithin eine insbesondere aktuelle Fahrdynamik des Fahrzeugs.

Um den Zustand besonders vorteilhaft klassifizieren und somit einen besonders vorteilhaften Betrieb des Fahrzeugs realisieren zu können, ist es in weiterer Ausgestaltung der Erfindung vorgesehen, dass mittels der elektronischen Recheneinrichtung der Ist-Drehmomentwert ermittelt wird, indem mittels der elektronischen Recheneinrichtung wenigstens ein erster Ausgangswert ermittelt wird, welcher wenigstens einen in der auch als Lenksystem bezeichneten Lenkung wirkenden, dynamischen Lenkmomentenanteil und einen in der Lenkung wirkenden, stationären Lenkmomentenanteil charakterisiert. Somit ist oder beschreibt der erste Ausgangswert beispielsweise eine Summe aus dem wenigstens einen in der Lenkung wirkenden, dynamischen Lenkmomentenanteil und dem in der Lenkung wirkenden, stationären Lenkmomentenanteil. Insbesondere beschreibt oder charakterisiert der wenigstens eine erste Ausgangswert den stationären Lenkmomentenanteil und mehrere, insbesondere alle, in der Lenkung wirkenden, dynamischen Lenkmomentenanteile, insbesondere derart, dass der stationäre Lenkmomentenanteil und der wenigstens eine, dynamische Lenkmomentenanteil, insbesondere die, ganz insbesondere alle, dynamischen Lenkmomentenanteile in Summe den ersten Ausgangswert ergeben. Außerdem wird dabei vorzugsweise mittels der elektronischen Recheneinrichtung der Ist-Drehmomentwert ermittelt, indem mittels der elektronischen Recheneinrichtung wenigstens ein zweiter Ausgangswert ermittelt wird, welcher bezogen auf den wenigstens einen in der Lenkung wirkenden, dynamischen Lenkmomentenanteil und den in der Lenkung wirkenden, stationären Lenkmomentenanteil ausschließlich den wenigstens einen in der Lenkung wirkenden, dynamischen Lenkmomentenanteil charakterisiert. Um den Ist-Drehmomentwert zu ermitteln, wird mittels der elektronischen Recheneinrichtung der Ist-Drehmomentwert in Abhängigkeit von den Ausgangswerten ermittelt, insbesondere dadurch, dass der zweite Ausgangswert von dem ersten Ausgangswert subtrahiert wird.

Um aus den Ausgangswerten den Ist-Drehmomentwert und somit in der Folge die Größe besonders vorteilhaft ermitteln zu können, ist es in weiterer Ausgestaltung der Erfindung vorgesehen, dass der zweite Ausgangswert mittels der elektronischen Recheneinrichtung in Abhängigkeit von einer Drehzahl des Fahrzeugrads und/oder eines weiteren Fahrzeugrads des Fahrzeugs und/oder in Abhängigkeit von einer Rollrate des Fahrzeugs und/oder in Abhängigkeit von einer Rollbeschleunigung des Fahrzeugs und/oder in Abhängigkeit von einer Gierbeschleunigung des Fahrzeugs und/oder in Abhängigkeit von einer Lenkwinkelrate des Fahrzeugs und/oder in Abhängigkeit von einer, insbesondere in Fahrzeuglängsrichtung des Fahrzeugs wirkenden, Verzögerung, mithin negativer Beschleunigung des Fahrzeugs und/oder in Abhängigkeit von einem Druck in wenigstens einer Radbremse des Fahrzeugs und/oder in Abhängigkeit von einem auch als Kreiseldrehmoment bezeichneten Kreiselmoment des Fahrzeugs berechnet wird. Beispielsweise wird die Drehzahl des Fahrzeugs mittels eines Drehzahlsensors erfasst. Die Rollrate des Fahrzeugs ist die erste zeitliche Ableitung des Rollwinkels, und die Rollbeschleunigung des Fahrzeugs ist die zweite zeitliche Ableitung des Rollwinkels, mithin die erste zeitliche Ableitung der Rollrate. Die Gierbeschleunigung ist die erste Ableitung eines insbesondere um die Fahrzeughochrichtung des Fahrzeugs wirkenden Gierwinkels des Fahrzeugs. Die Verzögerung des Fahrzeugs resultiert beispielsweise aus einer Bremsung des Fahrzeugs. Die Radbremse ist beispielsweise dem Fahrzeugrad zugeordnet und dazu ausgebildet, das Fahrzeugrad und somit das Fahrzeug abzubremsen. Somit ist die beispielsweise als Reibbremse ausgebildete Radbremse eine Betriebsbremse des Fahrzeugs.

Um den Ist-Drehmomentwert besonders vorteilhaft ermitteln zu können, ist es In weiterer Ausgestaltung der Erfindung ist es vorgesehen, dass mittels einer Erfassungseinrichtung des Fahrzeugs ein in der Lenkung wirkendes Drehmoment als das Lenkmoment erfasst wird, wobei der Ist-Drehmomentwert in Abhängigkeit von dem erfassten Drehmoment ermittelt wird. Beispielsweise ist oder umfasst die Erfassungseinrichtung die Messeinrichtung, oder die Erfassungseinrichtung ist ein Teil der Messeinrichtung. Beispielsweise wird in Abhängigkeit von dem Erfassen des Lenkmoments der erste Ausgangswert ermittelt, insbesondere gemessen. Hierfür stellt beispielsweise die Erfassungseinrichtung ein insbesondere elektrisches Momentensignal bereit, welches das gemessene Lenkmoment und dabei beispielsweise den ersten Ausgangswert charakterisiert. Die elektronische Recheneinrichtung kann das Momentensignal empfangen und dadurch den ersten Ausgangswert ermitteln. Somit umfasst beispielsweise das Lenkmoment den dynamischen Lenkmomentenanteil und den wenigstens einen stationären Lenkmomentenanteil. Ferner ist es denkbar, dass die elektronische Recheneinrichtung das Momentensignal empfängt und aus dem oder in Abhängigkeit von dem Momentensignal den ersten Ausgangswert ermittelt. Beispielsweise ist das Momentensignal das Messeinrichtungssignal oder ein Teil des Messeinrichtungssignals oder ein weiteres Signal.

Der Ist-Drehmomentwert wird in Abhängigkeit von den Ausgangswerten beispielsweise derart ermittelt, dass der zweite Ausgangswert von dem ersten Ausgangswert subtrahiert wird.

Um den Ist-Drehmomentwert besonders vorteilhaft ermitteln zu können, ist es in weiterer Ausgestaltung der Erfindung vorgesehen, dass mittels der elektronischen Recheneinrichtung wenigstens ein Einflusswert, welcher einen Einfluss einer Relativposition zwischen dem Fahrzeug und der das Fahrzeug, insbesondere aktuell, nutzenden Person auf das aktuell in der Lenkung des Fahrzeugs wirkende Lenkmoment charakterisiert, ermittelt wird, indem mittels der elektronischen Recheneinrichtung wenigstens Positionswert ermittelt wird, welcher eine mittels einer Sensoreinrichtung, insbesondere des Fahrzeugs, erfasste und durch die Relativposition zwischen der das Fahrzeug nutzenden Person und dem Fahrzeug beeinflusste Erfassungsgröße charakterisiert. In Abhängigkeit von dem Positionswert wird der Einflusswert ermittelt, wobei der Ist-Drehmomentwert in Abhängigkeit von dem Einflusswert ermittelt wird. Die Relativposition ist eine Position, die die das Fahrzeug insbesondere aktuell nutzende Person in Relation zu dem Fahrzeug, insbesondere aktuell, einnimmt, wobei die Relativposition auch als Sitzposition oder Fahrersitzposition bezeichnet wird. Hintergrund dieser Ausführungsform ist, dass die auch als Sitzposition oder Fahrersitzposition bezeichnete Relativposition zwischen der das Fahrzeug nutzenden Person und dem Fahrzeug einen Einfluss auf das Lenkmoment insgesamt haben kann, insbesondere dann, wenn die Sitzposition von einer auch als Neutralposition bezeichneten Ausgangsposition abweicht. Dies ist insbesondere dann der Fall, wenn der Oberkörper der beispielsweise in oder auf einer Sitzanlage des Fahrzeugs sitzenden Person in Fahrzeugquerrichtung des Fahrzeugs und somit in einer auch als y-z-Ebene bezeichneten Ebene betrachtet, welche durch die Fahrzeugquerrichtung und durch die Fahrzeughochrichtung aufgespannt ist, von der auch als Fahrzeughochachse oder Hochachse bezeichneten Fahrzeughochrichtung abweicht, sodass der Oberkörper in Fahrzeugquerrichtung gegenüber der beispielsweise durch den auch als Massenschwerpunkt bezeichneten Schwerpunkt des Fahrzeugs verlaufenden Hochachse geneigt ist. Ferner kann beispielsweise die Sitzposition das Lenkmoment dann oder dadurch beeinflussen, dass ein insbesondere aktueller Aufsitzpunkt, in welchem die Person, insbesondere mit ihrem Gesäß, auf oder in der Sitzanlage sitzt, in Fahrzeugquerrichtung und somit beispielsweise in der genannten Ebene betrachtet versetzt zu dem Schwerpunkt des Fahrzeugs und somit versetzt zu der Hochachse ist, mithin einen in Fahrzeugquerrichtung und insbesondere in der Ebene verlaufenden Versatz zu dem Schwerpunkt des Fahrzeugs beziehungsweise zu der Hochachse des Fahrzeugs aufweist. Durch Messen, das heißt Erfassen der Messgröße und somit der Relativposition kann ein etwaiger Einfluss, mithin eine etwaige Wirkung der Relativposition auf das Lenkmoment ermittelt und bei der Ermittlung des Ist-Drehmomentwerts vorteilhaft berücksichtigt werden, sodass der aktuelle Fahrzustand des Fahrzeugs besonders vorteilhaft klassifiziert und in der Folge ein vorteilhafter Betrieb des Fahrzeugs realisiert werden kann.

Das erfindungsgemäße Verfahren muss nicht notwendigerweise das Erfassen der Erfassungsgröße mittels der Sensoreinrichtung aufweisen.

Als besonders hat es sich jedoch gezeigt, wenn bei dem Verfahren mittels der Sensoreinrichtung die Erfassungsgröße erfasst wird, wodurch die Relativposition besonders vorteilhaft berücksichtigt werden kann.

Um die Relativposition besonders vorteilhaft ermitteln zu können, ist es bei einer weiteren Ausführungsform der Erfindung vorgesehen, dass als zumindest ein Teil der Sensoreinrichtung eine Sensoreinrichtung des Fahrzeugs verwendet wird.

Eine weitere Ausführungsform zeichnet sich dadurch aus, dass als zumindest ein Teil der Sensoreinrichtung eine an der Person angeordnete Sensoreinrichtung verwendet wird, wodurch die Messgröße und somit die Relativposition besonders vorteilhaft gemessen, das heißt erfasst werden können.

Bei einer weiteren, besonders vorteilhaften Ausführungsform der Erfindung ist es vorgesehen, dass als zumindest ein Teil der Sensoreinrichtung eine an wenigstens einem Kleidungsstück der Person angeordnete Sensoreinrichtung verwendet wird, wodurch die Relativposition und somit die Messgröße besonders vorteilhaft und insbesondere für die Person besonders angenehm erfasst werden können.

Schließlich hat es sich als besonders vorteilhaft gezeigt, wenn das Fahrzeug ein einspuriges Zweirad, insbesondere als ein Motorrad, ausgebildet ist.

Ein zweiter Aspekt der Erfindung betrifft ein Fahrzeug, welches zum Durchführen eines Verfahrens gemäß dem ersten Aspekt der Erfindung ausgebildet ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Einzelheiten der Erfindung ergeben sich aus der nachfolgenden Beschreibung eines bevorzugten Ausführungsbeispiels mit den zugehörigen Zeichnungen. Dabei zeigt
- Fig. 1: eine schematische Seitenansicht eines als einspuriges Zweirad ausgebildeten Fahrzeugs;
- Fig. 2: ein Flussdiagramm zum Veranschaulichen eines Verfahrens zum Klassifizieren eines insbesondere aktuellen Fahrzustands des Fahrzeugs;
- Fig. 3: ein weiteres Flussdiagramm zum weiteren Veranschaulichen des Verfahrens;
- Fig. 4: ein weiteres Flussdiagramm zum weiteren Veranschaulichen des Verfahrens; und
- Fig. 5: eine schematische Darstellung eines Zustandsautomaten zum vorteilhaften Klassifizieren des Fahrzustands.

In den Figuren sind gleiche oder funktionsgleiche Elemente mit gleichen Bezugszeichen versehen.

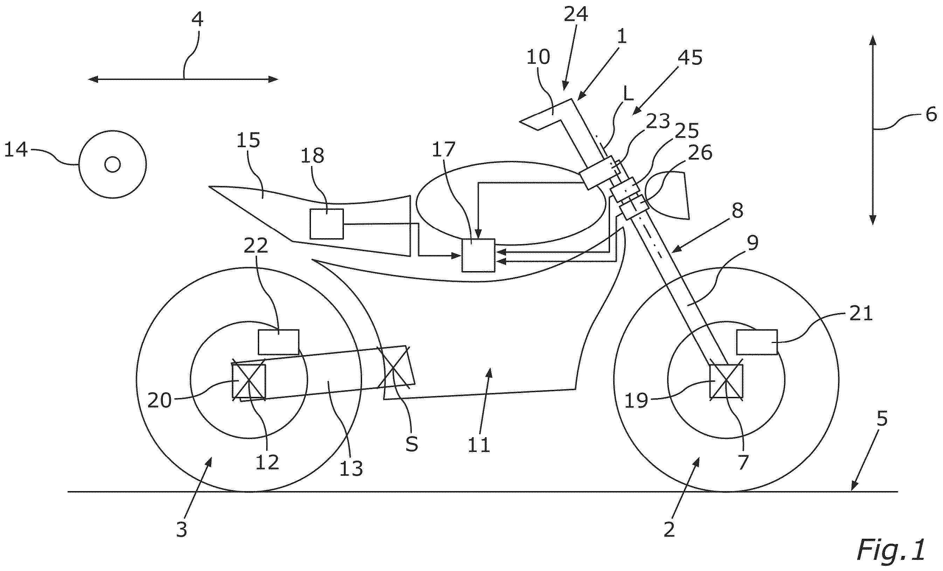

Fig. 1 zeigt in einer schematischen Seitenansicht ein vorliegend als einspuriges Zweirad ausgebildetes Fahrzeug 1, welches bei dem in Fig. 1 gezeigten Ausführungsbeispiel als ein einspuriges Kraftrad, insbesondere als ein einspuriges Motorrad, ausgebildet ist. Das Fahrzeug 1 weist genau zwei Fahrzeugräder 2 und 3 auf, welche in Fahrzeuglängsrichtung des Fahrzeugs 1 miteinander und somit aufeinanderfolgend angeordnet sind. Die Fahrzeuglängsrichtung ist durch einen Doppelpfeil 4 veranschaulicht. Bei dem in Fig. 1 gezeigten Ausführungsbeispiel ist das Fahrzeugrad 2 ein Vorderrad, und das Fahrzeugrad 3 ist ein Hinterrad. Die Fahrzeugräder 2 und 3 werden auch einfach als Räder bezeichnet. Die Fahrzeugräder 2 und 3 sind Bodenkontaktelemente des Fahrzeugs 1, welches über die Bodenkontaktelemente in Fahrzeughochrichtung des Fahrzeugs 1 nach unten hin an einem auch als Untergrund bezeichneten Boden 5 abgestützt oder abstützbar ist. Wird das Fahrzeug 1 entlang des Bodens 5 gefahren, während das Fahrzeug 1 in Fahrzeughochrichtung des Fahrzeugs 1 nach unten hin über die Bodenkontaktelemente an dem Boden 5 abgestützt ist, so rollen die Bodenkontaktelemente, insbesondere direkt, an dem Boden 5 ab. Die Fahrzeughochrichtung des Fahrzeugs 1 ist durch einen Doppelpfeil 6 veranschaulicht. Das Fahrzeugrad 2 ist um eine Raddrehachse 7 relativ zu einem Lenkelement 8 des Fahrzeugs 1 drehbar an dem Lenkelement 8 gehalten. Das Lenkelement 8 umfasst eine Lenkgabel 9 und einen Griff 10 und ist um eine auch als Lenkachse L bezeichnete Schwenkachse relativ zu einem vorliegend als Rahmen ausgebildeten Fahrgestell 11 des Fahrzeugs 1 verschwenkbar an dem Fahrgestell 11 gehalten. Beispielsweise ist der Griff 10 ein Lenker oder durch einen Lenker gebildet. Das Lenkelement 8 und mit diesem das Fahrzeugrad 2 sind um die Lenkachse L relativ zu dem Fahrgestell 11 verschwenkbar und somit zu lenken. Eine das Fahrzeug 1 insbesondere aktuell nutzende Person kann mit ihren Händen den Griff 10 ergreifen, insbesondere umgreifen, wodurch die das Fahrzeug 1 insbesondere aktuell nutzende Person über ihre Arme, die die Hände der Person umfassen, eine Kraft oder ein Drehmoment auf das Lenkelement 8 insbesondere über den Griff 10 ausüben kann. Das Lenkelement 8 und somit der Griff 10 sind Bestandteile einer auch als Lenksystem bezeichneten Lenkung 24 des Fahrzeugs 1, sodass die Person das zuvor genannte Drehmoment oder die zuvor genannte Kraft auf die Lenkung 24 ausüben kann. Hieraus resultiert ein in der Lenkung 24 und insbesondere um die Lenkachse L wirkendes, auch als Personenmoment oder Personendrehmoment bezeichnetes Drehmoment. Durch um die Lenkachse L und relativ zu dem Fahrgestell 11 erfolgendes Verschwenken des Lenkelements 8, das heißt der Lenkung 24 und somit des Fahrzeugrads 2 können Kurvenfahrten, Fahrtrichtungsänderungen und Fahrbahn- oder Fahrspurwechsel des Fahrzeugs 1 bewirkt werden. Das Fahrzeugrad 3 ist um eine zweite Raddrehachse 12 relativ zu einer auch als Hinterradschwinge bezeichneten Schwinge 13 des Fahrzeugs 1 drehbar an der Schwinge 13 gehalten. Die Schwinge 13 ist ihrerseits um eine Schwenkachse S relativ zu dem Fahrgestell 11 verschwenkbar an dem Fahrgestell 11 gehalten, sodass die Schwinge 13 und das Fahrzeugrad 3 um die Schwenkachse S relativ zu dem Fahrgestell 11 verschwenkbar an dem Fahrgestell 11 gehalten sind. Bei einer Geradeausfahrt des Fahrzeugs 1, welches bei seiner Geradeausfahrt in Fahrzeuglängsrichtung insbesondere nach vorne und dabei insbesondere entlang einer Geraden fährt, verlaufen die Raddrehachsen 7 und 12 parallel zueinander. Außerdem verläuft außerdem die Schwenkachse S in Fahrzeugquerrichtung des Fahrzeugs 1, dessen Fahrzeugquerrichtung durch einen Doppelpfeil 14 veranschaulicht ist und senkrecht zur Bildebene von Fig. 1 verläuft. Das Fahrzeug 1 weist beispielsweise einen beispielsweise an dem Fahrgestell 11 gehaltenen Sitz 15 auf, welcher auch als Sitzanlage bezeichnet wird. Die das Fahrzeug 1 aktuell nutzende Person sitzt beispielsweise, insbesondere in einem Aufsitzpunkt, auf dem Sitz 15, wobei die Person beispielsweise eine Fahrerin oder ein Fahrer des Fahrzeugs 1 ist. Die Person kann sich auf den Sitz 15 setzen und in der Folge mit ihren Händen den Griff 10 ergreifen, insbesondere umgreifen, sodass die Person mit ihren Händen über den Griff 10 das Lenkelement 8 und somit die Lenkung 24 und dadurch das Fahrzeugrad 2 um die Lenkachse L relativ zu dem Fahrgestell 11 verschwenken kann. Hierdurch kann die Person Kurvenfahrten, Fahrtrichtungsänderungen und Fahrspurwechsel des Fahrzeugs 1 bewirken, mithin das Fahrzeug 1 lenken. Wieder mit anderen Worten ausgedrückt sind zum Lenken des Fahrzeugs 1 das Lenkelement 8 und mit diesem das Fahrzeugrad 2 um die Lenkachse L relativ zu dem Fahrgestell 11 verschwenkbar.

Das Fahrzeug 1 weist auch eine auch als Steuergerät bezeichnete, elektronische Recheneinrichtung 17 auf, mittels welcher, wie im Folgenden noch genauer erläutert wird, ein Verfahren zum Klassifizieren eines insbesondere aktuellen Fahrzustands des Fahrzeugs 1 durchgeführt wird. Bei dem Verfahren wird beispielsweise das Fahrzeug 1 entlang des Bodens 5 gefahren, während das Fahrzeug 1 in Fahrzeughochrichtung nach unten hin über die Bodenkontaktelemente an dem Boden 5 abgestützt ist und somit die Bodenkontaktelemente, insbesondere direkt, an dem Boden 5 abrollen.

Das Fahrzeug 1 weist eine Sensoreinrichtung 45 auf, welche beispielsweise eine Inertialmesstechnik 18 umfasst. Mittels der Inertialmesstechnik 18 können Beschleunigungen des Fahrzeugs 1 und dabei beispielsweise in Fahrzeugquerrichtung und/oder in Fahrzeuglängsrichtung und/oder in Fahrzeughochrichtung verlaufende Beschleunigungen des Fahrzeugs 1 erfasst werden. Ferner kann beispielsweise mittels der Inertialmesstechnik 18 ein Rollwinkel des Fahrzeugs 1 erfasst werden. Ferner ist es denkbar, dass mittels der Inertialmesstechnik 18 eine Rollrate als erste zeitliche Ableitung des Rollwinkels und/oder eine Rollbeschleunigung als zweite zeitliche Ableitung des Rollwinkels, mithin als erste zeitliche Ableitung der Rollrate, und/oder eine Gierbeschleunigung des Fahrzeugs 1 erfasst werden können. Die Sensoreinrichtung 45 umfasst einen dem Fahrzeugrad 2 zugeordneten, einfach auch als Drehzahlsensor bezeichneten Raddrehzahlsensor 19, mittels welchem eine Drehzahl des Fahrzeugrads 2 um die Raddrehachse 7 erfasst werden kann. Des Weiteren umfasst die Sensoreinrichtung 45 einen einfach auch als Drehzahlsensor bezeichneten, dem Fahrzeugrad 3 zugeordneten Raddrehzahlsensor 20, mittels welchem eine Drehzahl des Fahrzeugrads 3 um die Raddrehachse 12 erfasst werden kann. Dem jeweiligen Fahrzeugrad 2, 3 ist beispielsweise eine jeweilige Radbremse zugeordnet. Die jeweilige Radbremse kann eine Reibbremse sein. Insbesondere kann die jeweilige Radbremse als eine jeweilige Scheibenbremse ausgebildet sein. Ganz vorzugsweise ist die jeweilige Radbremse eine Betriebsbremse des Fahrzeugs 1, welches mittels der jeweiligen Betriebsbremse abgebremst werden kann. Dabei umfasst die Sensoreinrichtung 45 beispielsweise einen Bremsdrucksensor 21, der der dem Fahrzeugrad 2 zugeordneten Radbremse zugeordnet ist. Die dem Fahrzeugrad 2 zugeordnete Radbremse wird auch als erste Radbremse bezeichnet, wobei mittels des Bremsdrucksensors 21 ein einfach auch als erster Druck bezeichneter, erster Bremsdruck in der ersten Radbremse erfasst werden kann. Die Sensoreinrichtung 45 umfasst außerdem einen zweiten Bremsdrucksensor 22, der der dem Fahrzeugrad 3 zugeordneten, auch als zweite Radbremse bezeichneten Radbremse zugeordnet ist. Mittels des Bremsdrucksensors 22 kann ein einfach auch als zweiter Druck bezeichneter zweiter Bremsdruck in der zweiten Radbremse erfasst werden. Des Weiteren umfasst die Sensoreinrichtung 45 beispielsweise einen Lenkmomentsensor 23, mittels welchem ein um die Lenkachse L und in der Lenkung 24 wirkendes Lenkmoment erfasst werden kann. Mit anderen Worten ist das genannte Lenkmoment ein in der Lenkung 24 wirkendes Drehmoment, welches beispielsweise mittels des Lenkmomentsensors 23 der Sensoreinrichtung 45 erfasst werden kann. Dabei resultiert beispielsweise das Lenkmoment ausschließlich oder zumindest teilweise aus dem zuvor genannten Personenmoment. Mit anderen Worten kann beispielsweise das Lenkmoment dem Personenmoment entsprechen, mithin das Personenmoment sein, oder das Lenkmoment setzt sich aus dem Personenmoment und wenigstens oder genau einem weiteren Drehmoment zusammen. Optional umfasst die Sensoreinrichtung 45 einen Lenkwinkelsensor 25, mittels welchem ein jeweiliger, um die Lenkachse L verlaufender Lenkwinkel erfasst werden kann, um den das Lenkelement 8 um die Lenkachse L relativ zu dem Fahrgestell 11 verschwenkt werden kann.

Zum Bewirken der Geradeausfahrt des Fahrzeugs 1 befindet sich das Lenkelement 8 in einer Geradeausstellung, in welcher der Lenkwinkel 0 Grad beträgt. Optional umfasst die Sensoreinrichtung 45 einen Lenkratensensor 26, mittels welchem eine Lenkrate des Lenkelements 8 beziehungsweise der Lenkung 24 erfasst werden kann. Insbesondere ist die Lenkrate die erste zeitliche Ableitung des Lenkwinkels.

Insbesondere wird das Verfahren während einer Fahrt des Fahrzeugs 1 durchgeführt, welches während der Fahrt entlang der Bodens 5 gefahren wird, während das Fahrzeug 1 über seine Bodenkontaktelemente in Fahrzeughochrichtung nach unten hin an dem Boden 5 abgestützt ist. Insbesondere handelt es sich bei der Fahrt um eine Kurvenfahrt, bei der beispielsweise das Fahrzeug 1 durch eine Kurve, wie beispielsweise eine Rechtskurve oder eine Linkskurve, insbesondere vorwärts, fährt, sodass beispielsweise das Fahrzeug 1 bei der Fahrt und bei dem Durchführen des Verfahrens in Schräglage ist und somit einen von null unterschiedlichen Rollwinkel aufweist.

Der Rollwinkel des Fahrzeugs 1 kann beispielsweise mittels der Sensoreinrichtung 45, insbesondere mittels der Inertialmesstechnik 18, erfasst werden.

Beispielsweise wird mittels der Sensoreinrichtung 45 eine als Erfassungsgröße bezeichnete Messgröße erfasst und somit gemessen, die durch eine auch als Sitzposition oder Fahrersitzposition bezeichnete Relativposition zwischen dem Fahrzeug 1 und der das Fahrzeug 1 aktuell nutzenden und aktuell auf dem Sitz 15 insbesondere in dem Aufsitzpunkt sitzenden Person beeinflusst ist. Dies bedeutet, dass die Erfassungsgröße die Relativposition charakterisiert, das heißt beschreibt oder eingeht. Mittels der elektronischen Recheneinrichtung 17 wird beispielsweise ein Positionswert ermittelt, welcher die gemessene, das heißt erfasste Erfassungsgröße charakterisiert. Die Relativposition kann einen Einfluss auf das insbesondere aktuell in der Lenkung 24 wirkende Lenkmoment haben, wobei in Abhängigkeit von dem Positionswert ein Einflusswert mittels der elektronischen Recheneinrichtung 17 ermittelt wird, sodass der Einflusswert die Messgröße und somit die Relativposition und somit einen Einfluss, mithin eine Wirkung der Relativposition auf das aktuell in der Lenkung 24 wirkende Lenkmoment charakterisiert.

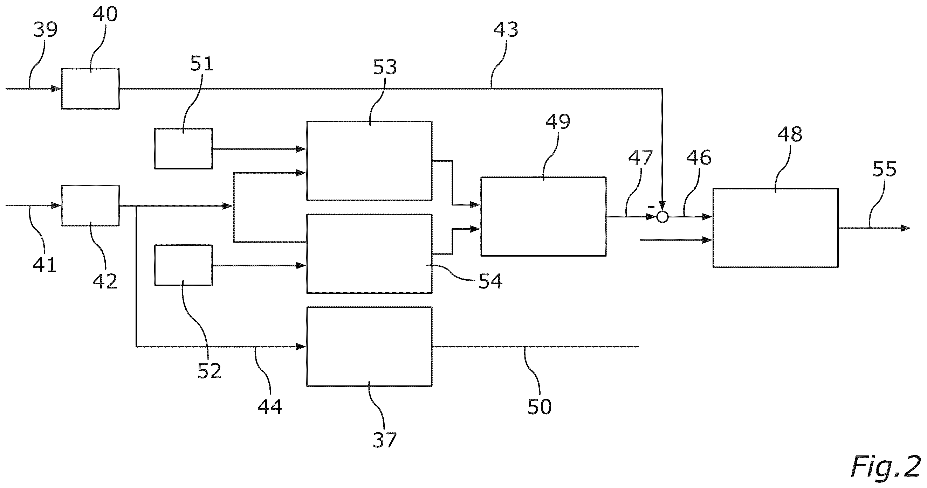

Bei dem Verfahren wird beispielsweise mittels der Sensoreinrichtung 45, insbesondere mittels des Lenkmomentsensors 23, das Lenkmoment gemessen. Dabei stellt beispielsweise die Sensoreinrichtung 45, insbesondere der Lenkmomentsensor 23, ein insbesondere elektrisches Messsignal bereit, welches das mittels der Sensoreinrichtung 45 gemessene Lenkmoment charakterisiert, das heißt angibt oder beschreibt. In Fig. 2 veranschaulicht ein Pfeil 39 das mittels der Sensoreinrichtung 45 gemessene Lenkmoment. Somit veranschaulicht beispielsweise der Pfeil 39 das das gemessene Lenkmoment charakterisierende Messsignal. Beispielsweise wird das Messsignal 39 mittels eines Filters 40 gefiltert. Das gefilterte Messsignal ist oder umfasst einen Messwert oder wird auch als Messwert bezeichnet, wobei der Messwert als erster Ausgangswert verwendet wird. Das zuvor genannte Messsignal wird auch als erstes Messsignal bezeichnet. Darüber hinaus ist oder umfasst die Sensoreinrichtung 45 eine Erfassungseinrichtung, mittels welcher Fahrdynamikgrößen gemessen werden, welche den insbesondere aktuellen Fahrzustand, das heißt eine aktuelle Fahrdynamik des Fahrzeugs 1 beschreiben. Dabei stellt beispielsweise die Erfassungseinrichtung, das heißt die Sensoreinrichtung 45 ein zweites Messsignal bereit, welches beispielsweise mittels eines zweiten Filters 42 gefiltert wird. In Fig. 2 veranschaulicht ein Pfeil 41 die Fahrdynamikgrößen. Somit veranschaulicht beispielsweise der Pfeil 41 das zweite Messsignal. Das zweite Messsignal wird auch als Fahrdynamiksignal bezeichnet. Die Fahrdynamikgrößen umfassen beispielsweise eine Drehzahl des Fahrzeugrads 2, eine Drehzahl des Fahrzeugrads 3, den Rollwinkel des Fahrzeugs 1, eine Rollrate des Fahrzeugs 1 als erste zeitliche Ableitung des Rollwinkels, eine Rollbeschleunigung des Fahrzeugs 1 als zweite zeitliche Ableitung des Rollwinkels, eine Gierbeschleunigung des Fahrzeugs 1, die Lenkwinkelrate, eine insbesondere in Fahrzeuglängsrichtung des Fahrzeugs 1 wirkende, positive und/oder negative Beschleunigung des Fahrzeugs 1, den Druck in der ersten Radbremse, den Druck in der zweiten Radbremse und/oder eine in Fahrzeughochrichtung des Fahrzeugs 1 wirkende Beschleunigung des Fahrzeugs 1 und/oder andere Parameter. Die Erfassungseinrichtung ist somit wenigstens eine Messgröße, die durch den insbesondere aktuellen Fahrzustand beeinflusst ist und die genannten Fahrdynamikgrößen, die durch den insbesondere aktuellen Fahrzustand beeinflusst sind, umfasst, angibt, charakterisiert oder beschreibt. Dabei wird beispielsweise mittels der elektronischen Recheneinrichtung 17 in Abhängigkeit von wenigstens einer der Fahrdynamikgrößen, insbesondere in Abhängigkeit von den Fahrdynamikgrößen, und somit in Abhängigkeit von der Messgröße wenigstens ein den aktuellen Fahrzustand des Fahrzeugs 1 charakterisierender Zustandswert ermittelt.

In Fig. 2 veranschaulicht ein Pfeil 43 den zuvor genannten ersten Ausgangswert, welcher das insbesondere mittels des Filters 40 gefilterte, mittels des Lenkmomentsensors 23 erfasste Lenkmoment charakterisiert. Alternativ oder zusätzlich kann eine weitere der Fahrdynamikgrößen beispielsweise eine aktuelle Fahrgeschwindigkeit des Fahrzeugs 1 sein, welches mit der aktuellen Fahrgeschwindigkeit entlang des Bodens 5, insbesondere vorwärts, gefahren wird, während das Fahrzeug 1 über die Bodenkontaktelemente in Fahrzeughochrichtung nach unten hin an dem Boden 5 abgestützt ist. Ein Pfeil 44 veranschaulicht einen Ist-Winkelwert, welcher den aktuellen, mittels der Sensoreinrichtung 45, insbesondere mittels der Inertialmesstechnik 18, gemessenen und beispielsweise mittels des Filters 40 gefilterten Rollwinkel des Fahrzeugs 1 charakterisiert. Außerdem veranschaulicht der Pfeil 44 einen Ist-Geschwindigkeitswert, welcher die aktuelle, mittels der Sensoreinrichtung 45, insbesondere mittels der Inertialmesstechnik 18, gemessene und insbesondere mittels des Filters 40 gefilterte Fahrgeschwindigkeit des Fahrzeugs 1 charakterisiert. In Fig. 2 ist mit 37 ein Referenz-Kennfeld veranschaulicht, das beispielsweise in einem insbesondere elektrischen oder elektronischen Datenspeicher der elektronischen Recheneinrichtung 17 gespeichert ist. Der die aktuelle, mittels der Sensoreinrichtung 45 erfasste und somit gemessene Fahrgeschwindigkeit des Fahrzeugs 1 charakterisierende Ist-Geschwindigkeitswert und der den aktuellen, mittels der Sensoreinrichtung 45 gemessenen und somit erfassten Rollwinkel des Fahrzeugs 1 charakterisierende Ist-Wert bilden ein Ist-Wertepaar. Das Referenz-Kennfeld 37 wurde beispielsweise für einen Referenz-Reibwert ermittelt, der beispielsweise 1,0 beträgt und eine Reibung zwischen dem Fahrzeugrad 2 und dem Untergrund (Boden 5) oder einem anderen Untergrund charakterisiert. Das Referenz-Kennfeld 37 umfasst mehrere Referenz-Winkelwerte, mehrere Referenz-Geschwindigkeitswerte und mehrere Referenz-Drehmomentwerte, wobei das Referenz-Kennfeld 37 einem jeweiligen Referenz-Wertepaar, welches genau einen der Referenz-Winkelwerte und genau einen der Referenz-Geschwindigkeitswerte umfasst, genau einen der Referenz-Drehmomentwerte zuordnet. In Abhängigkeit von dem Ist-Wertepaar wird aus dem Referenz-Kennfeld 37 eines der Referenz-Wertepaare als zu dem Ist-Wertepaar gehörendes Wertepaar ausgewählt. Der dem ausgewählten Referenz-Wertepaar durch das Referenz-Kennfeld 37 zugeordnete Referenz-Drehmomentwert wird mittels der elektronischen Recheneinrichtung 17 ermittelt, mithin aus dem Referenz-Kennfeld 37 ausgelesen. In Fig. 2 ist durch einen Pfeil 46 ein auch als Stationärwert M_{stationär} bezeichneter Ist-Drehmomentwert veranschaulicht, welcher aus dem durch den Pfeil 43 veranschaulichten, ersten Ausgangswert und aus einem durch einen Pfeil 47 veranschaulichten, zweiten Ausgangswert mittels der elektronischen Recheneinrichtung 17 ermittelt, insbesondere berechnet, wird, insbesondere derart oder dadurch, dass eine Differenz zwischen dem ersten Ausgangswert und dem zweiten Ausgangswert gebildet wird. Der ermittelte Referenz-Drehmomentwert ist in Fig. 2 durch einen Pfeil 50 veranschaulicht.

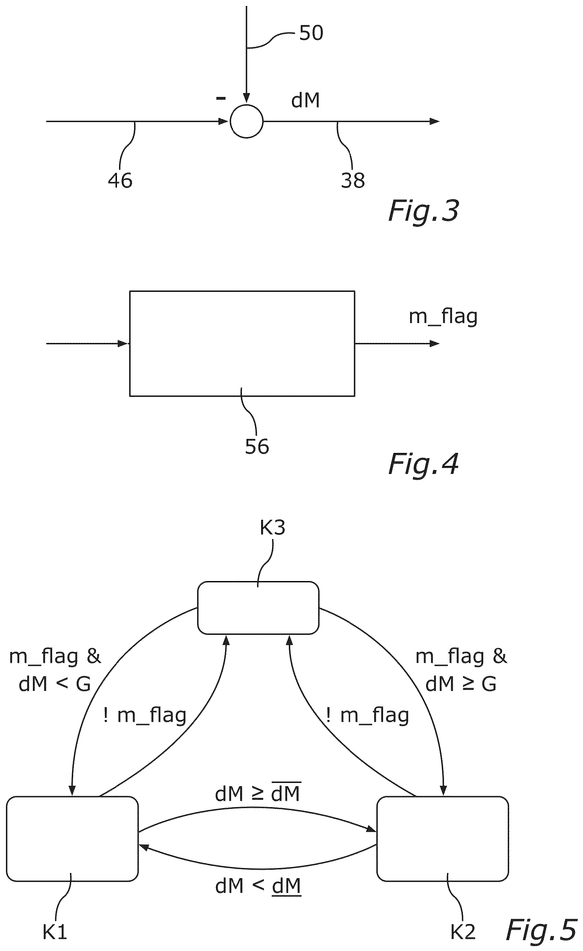

In Fig. 2 durch einen Block 48 veranschaulicht ist, dass mittels der elektronischen Recheneinrichtung 17 ein Vergleich durchgeführt wird, bei welchem der durch den Pfeil 50 veranschaulichte, ermittelte Referenz-Drehmomentwert mit dem durch den Pfeil 46 veranschaulichten, ermittelten Ist-Drehmomentwert verglichen wird. Bei dem Vergleich wird mittels der elektronischen Recheneinrichtung 17 der ermittelte Referenz-Drehmomentwert mit dem ermittelten Ist-Drehmomentwert verglichen, wobei bei dem oder durch den Vergleich eine in Fig. 3 dM bezeichnete Differenz zwischen dem ermittelten Referenz-Drehmomentwert und dem ermittelten Ist-Drehmomentwert mittels der elektronischen Recheneinrichtung 17 ermittelt wird. Die Differenz dM ist in Fig. 3 durch einen Pfeil 38 veranschaulicht. Somit ist die Differenz dM eine durch den Pfeil 38 veranschaulichte Ausgangsgröße des genannten Vergleichs. Des Weiteren veranschaulicht der Block 48 eine Klassifikation des insbesondere aktuellen Fahrzustands des Fahrzeugs 1, wobei die Klassifikation mittels der elektronischen Recheneinrichtung 17 durchgeführt wird.

Fig. 5 veranschaulicht Klassen K1, K2 und K3, welche paarweise voneinander unterschiedlich sind. Beispielsweise sind die Klassen K1, K2 und K3 in einem, insbesondere elektrischen und/oder elektronischen, Datenspeicher der elektronischen Recheneinrichtung 17 gespeichert. Bei der in Fig. 2 durch den Block 48 veranschaulichten Klassifikation des insbesondere aktuellen Fahrzustands des Fahrzeugs 1 wird zum Klassifizieren des insbesondere aktuellen Fahrzustands des Fahrzeugs 1 mittels der elektronischen Recheneinrichtung 17 in Abhängigkeit von der Differenz dM, insbesondere genau, einer der mehreren vorgegebenen Klassen K1, K2 und K3 zugeordnet. Dies bedeutet, dass bei der Klassifikation mittels der elektronischen Recheneinrichtung 17 in Abhängigkeit von der Differenz dM der Fahrzustand des Fahrzeugs 1 in, insbesondere genau, eine der vorgegebenen Klassen K1, K2 und K3 eingeordnet wird. Dieses Einordnen des Fahrzustands in die, insbesondere genau, eine der vorgegebenen Klassen K1, K2 und K3 ist die zuvor genannte und durch den Block 48 veranschaulichte Klassifikation.

In Fig. 2 veranschaulicht ein Pfeil 55 eine Ausgangsgröße der durch den Block 48 veranschaulichten Klassifikation, wobei diese Ausgangsgröße ein Ergebnis der Klassifikation ist. Das Ergebnis der Klassifikation ist oder umfasst beispielsweise wenigstens oder genau einen Klassifikationswert, der die Klasse K1, K2, K3 charakterisiert, in die bei der Klassifikation der Fahrzustand mittels der elektronischen Recheneinrichtung 17 eingeordnet wird oder wurde. Somit veranschaulicht beispielsweise Fig. 5 einen Inhalt des Blocks 48, mithin einen Inhalt der Klassifikation. Mit anderen Worten veranschaulicht beispielsweise Fig. 5 einen oder mehrere Vorgänge, die bei der Klassifikation zum Klassifizieren des Fahrzustands durchgeführt werden.

Das in der Lenkung 24 wirkende Lenkmoment, welches beispielsweise mittels des Lenkmomentsensors 23 gemessen, das heißt erfasst, wird, setzt sich beispielsweise zusammen aus wenigstens oder genau einem stationären Lenkmomentenanteil und wenigstens einem oder mehreren, dynamischen Lenkmomentenanteilen. Der auch als Stationärwert M_{stationär} bezeichnete Ist-Drehmomentwert charakterisiert beispielsweise bezogen auf den stationären Lenkmomentenanteil und bezogen auf den wenigstens einen dynamischen Lenkmomentenanteil ausschließlich den stationären Lenkmomentenanteil, wobei beispielsweise der durch den Pfeil 47 veranschaulichte, zweite Ausgangswert den wenigstens einen dynamischen Lenkmomentenanteil, insbesondere die dynamischen Lenkmomentenanteile, charakterisiert, wobei beispielsweise der zweite Ausgangswert von dem ersten Ausgangswert abgezogen, das heißt subtrahiert wird.

In Fig. 2 veranschaulicht ein Block 51 auch als Fahrzeugparameter bezeichnete Parameter des Fahrzeugs 1, wobei die Fahrzeugparameter beispielsweise das Fahrzeug 1 und/oder den insbesondere aktuellen Fahrzustand des Fahrzeugs 1 charakterisieren. Außerdem sind durch einen Block 52 Korrekturfaktoren veranschaulicht. Durch einen Block 53 ist veranschaulicht, dass mittels der elektronischen Recheneinrichtung 17 in Abhängigkeit von zumindest einem Teil der mittels der Sensoreinrichtung 45 gemessenen und beispielsweise mittels des Filters 42 gefilterten Fahrdynamikgrößen die dynamischen Lenkmomentenanteile berechnet werden. Außerdem ist durch einen Block 54 veranschaulicht, dass in Abhängigkeit von den Korrekturfaktoren und in Abhängigkeit von zumindest einem Teil der mittels der Sensoreinrichtung 45 gemessenen und beispielsweise mittels des Filters 42 gefilterten Fahrdynamikgrößen Korrekturterme, insbesondere als Korrekturdrehmomente berechnet werden. Die Korrekturterme werden beispielsweise mit Mₖₒᵣᵣ bezeichnet, und die dynamischen Lenkmomentenanteile werden beispielsweise mit M_{dyn} bezeichnet, wobei beispielsweise die Korrekturterme und die dynamischen Lenkmomentenanteile bei einem Block 49 zu dem zweiten Ausgangswert zusammengefasst werden, insbesondere durch Addition. Dies bedeutet, dass beispielsweise der zweite Ausgangswert die dynamischen Lenkmomentenanteile und die Korrekturterme umfasst. Insbesondere werden die Korrekturterme und die dynamischen Lenkmomentenanteile, beispielsweise durch Addition, zu dem zweiten Ausgangswert zusammengefasst. Der zweite Ausgangswert wird beispielsweise von dem ersten Ausgangswert, mithin von dem Messwert, subtrahiert, um dadurch die Korrekturterme und die dynamischen Lenkmomentenanteile aus dem Messwert (erster Ausgangswert) herauszurechnen. Somit charakterisiert beispielsweise der durch den Pfeil 46 veranschaulichte Ist-Drehmomentwert besonders vorteilhaft den stationären Lenkmomentenanteil des mittels der Sensoreinrichtung 45 gemessenen, tatsächlich und aktuell in der Lenkung 24 wirkenden Lenkmoments.

Beispielsweise wird wenigstens eine Komponente des Fahrzeugs 1 in Abhängigkeit von der Klassifikation, insbesondere in Abhängigkeit von dem Klassifikationswert, betrieben. Die Komponente ist oder umfasst beispielsweise ein Fahrerassistenzsystem des Fahrzeugs 1. Alternativ oder zusätzlich ist oder umfasst die Komponente beispielsweise eine insbesondere elektrische oder elektronische Wiedergabeeinrichtung des Fahrzeugs 1. Mittels der Wiedergabeeinrichtung wird beispielsweise ein von der das Fahrzeug 1 aktuell nutzenden Person optisch und/oder haptisch und/oder akustisch wahrnehmbares Hinweissignal in oder an eine Umgebung der Wiedergabeeinrichtung ausgegeben. Hierdurch kann die das Fahrzeug 1 aktuell nutzende Person über die Klassifikation beziehungsweise über die Klasse, in die der Fahrzustand eingeordnet wurde, unterrichtet werden. In der Folge kann beispielsweise die Person ihr Fahrverhalten anpassen, um das Fahrzeug 1 sicher führen zu können.

In Fig. 4 veranschaulicht ein Block 56 eine Prüfung einer Eignung des aktuellen Fahrzustands des Fahrzeugs 1 für die Klassifikation. Diese Prüfung wird mittels der elektronischen Recheneinrichtung 17 durchgeführt. Bei der Prüfung prüft die elektronische Recheneinrichtung 17, ob sich der aktuelle, auch als Manöver oder Fahrmanöver bezeichnete Fahrzustand des Fahrzeugs 1 eignet, um klassifiziert zu werden, mithin die Klassifikation durchzuführen oder auf welche Weise die Klassifikation durchgeführt wird. Diesbezüglich ist durch den Block 56 veranschaulicht, dass mittels der elektronischen Recheneinrichtung 17 in Abhängigkeit von wenigstens einer mittels der Sensoreinrichtung 45 des Fahrzeugs 1 gemessenen und durch den aktuellen Fahrzustand des Fahrzeugs 1 beeinflussten Messgröße wenigstens ein den Fahrzustand charakterisierender Zustandswert ermittelt wird, welcher in Fig. 4 mit m_flag bezeichnet wird. Hierfür ist oder umfasst die Sensoreinrichtung 45 beispielsweise eine Erfassungseinrichtung, mittels welcher die genannte Messgröße gemessen, das heißt erfasst wird. Dabei ist, umfasst oder charakterisiert, mithin beschreibt beispielsweise das zweite Messsignal, mithin das Fahrdynamiksignal die Messgröße. Die Messgröße ist oder umfasst beispielsweise die insbesondere aktuelle Geschwindigkeit des Fahrzeugs 1 und/oder den Rollwinkel und/oder die Rollrate und/oder eine Längsbeschleunigung des Fahrzeugs 1 und/oder eine Vertikalbeschleunigung des Fahrzeugs 1, dessen Vertikalbeschleunigung in Fahrzeughochrichtung verläuft. Zum Klassifizieren des Fahrzustands des Fahrzeugs 1 wird der Fahrzustand auch in Abhängigkeit von dem Zustandsparameter m_flag in die eine Klasse K1, K2 und K3 eingeordnet.

Fig. 5 veranschaulicht einen Zustandsautomaten, mittels welchem die Klassifikation in Abhängigkeit von der Differenz dM und in Abhängigkeit von dem Zustandswert durchgeführt wird. Die Klasse K1 ist oder charakterisiert eine insbesondere aktuelle, sichere Fahrt des Fahrzeugs 1. Wird somit der aktuelle Fahrzustand in die Klasse K1 eingeordnet, so wird der aktuelle Fahrzustand als sichere Fahrt, das heißt als sicherer Fahrzustand klassifiziert. Die Klasse K2 ist oder charakterisiert eine Fahrt des Fahrzeugs 1 nahe eines Grenzbereichs des Fahrzeugs 1, mithin beispielsweise eine Fahrt des Fahrzeugs 1 auf einem Untergrund mit einem verringerten Reibwert zwischen dem Untergrund und dem jeweiligen Fahrzeugrad 2, 3. Unter dem verringerten Reibwert ist ein Reibwert zu verstehen, welcher geringer als ein beispielsweise vorgegebener oder vorgebbarer Grenzwert ist. Wird somit der aktuelle Fahrzustand des Fahrzeugs 1 in die Klasse K2 eingeordnet, so wird dadurch der aktuelle Fahrzustand des Fahrzeugs 1 als eine Fahrt nahe des Grenzbereichs, mithin eine Fahrt auf dem Untergrund mit dem verringerten Reibwert klassifiziert. Die Klasse K3 ist oder charakterisiert einen unbekannten, insbesondere aktuellen, Fahrzustand des Fahrzeugs 1. Wird somit der aktuelle Fahrzustand des Fahrzeugs 1 beispielsweise in die Klasse K3 eingeordnet, so wird dadurch geschätzt oder ermittelt, dass über den aktuellen Fahrzustand des Fahrzeugs 1 keine Aussage, keine Ermittlung oder kein Rückschluss dahingehend gemacht werden kann, ob es sich bei der aktuellen Fahrt, mithin bei dem aktuellen Fahrzustand des Fahrzeugs 1 um eine sichere Fahrt oder um eine Fahrt nahe des Grenzbereichs handelt.

Der Zustandswert kann beispielsweise, insbesondere genau, zwei voneinander unterschiedliche Werte annehmen, nämlich einen ersten Wert und einen zweiten Wert. Beispielsweise ist der erste Wert eins. Beispielsweise ist der zweite Wert null. Somit kann beispielsweise der Zustandswert entweder "wahr" ("true") sein, was beispielsweise dem Wert eins entspricht, oder der Zustandswert kann "falsch" ("false") sein, was beispielsweise dem Wert null entspricht. Bei der Klassifikation wird beispielsweise dann und insbesondere immer dann, wenn der Zustandsparameter den ersten Wert aufweist und die Differenz dM kleiner als ein vorgegebener Schwellenwert G ist, der Fahrzustand des Fahrzeugs 1 der Klasse K1 zugeordnet, mithin in die Klasse K1 eingeordnet. Bei der Klassifikation wird dann und insbesondere immer dann, wenn der Zustandsparameter den ersten Wert aufweist und die Differenz dM größer oder gleich dem vorgegebenen Schwellenwert G ist, der Fahrzustand der von der ersten Klasse K1 und von der dritten Klasse K3 unterschiedlichen zweiten Klasse K2 zugeordnet, mithin in die Klasse K2 eingeordnet. Bei der Klassifikation wird dann und insbesondere immer dann, wenn der Zustandsparameter den zweiten Wert aufweist, der Fahrzustand unabhängig von der Differenz dM der dritten Klasse K3 zugeordnet, mithin in die dritte Klasse K3 eingeordnet. Unter dem Merkmal, dass dann und insbesondere immer dann, wenn der Zustandsparameter den zweiten Wert aufweist, der Fahrzustand in die dritte Klasse K3 unabhängig von der Differenz dM eingeordnet wird, ist zu verstehen, dass dann, wenn der Zustandsparameter aufweist, es unerheblich ist, ob die Differenz dM kleiner als der Schwellenwert G, größer als der Schwellenwert G oder gleich dem Schwellenwert G ist, der Fahrzustand wird immer, das heißt unabhängig davon, ob die Differenz dM größer, kleiner oder gleich dem Schwellenwert G ist, in die dritte Klasse K3 eingeordnet. Hintergrund ist Folgender: Wird ermittelt, dass der Zustandswert den zweiten Wert aufweist, so wird hierdurch ermittelt, dass keine Aussage, Ermittlung oder Einschätzung darüber getroffen werden kann, ob der aktuelle Fahrzustand eine sichere Fahrt oder eine Fahrt nahe des Grenzbereichs ist. Dadurch können Fehlinformationen der das Fahrzeug 1 aktuell nutzenden Person vermieden werden.

### Bezugszeichenliste

- 1: Fahrzeug
- 2: Fahrzeugrad
- 3: Fahrzeugrad
- 4: Doppelpfeil
- 5: Boden
- 6: Doppelpfeil
- 7: Raddrehachse
- 8: Lenkelement
- 9: Lenkgabel
- 10: Griff
- 11: Fahrgestell
- 12: Raddrehachse
- 13: Schwinge
- 14: Doppelpfeil
- 15: Sitz
- 17: elektronische Recheneinrichtung
- 18: Inertialmesstechnik
- 19: Raddrehzahlsensor
- 20: Raddrehzahlsensor
- 21: Bremsdrucksensor
- 22: Bremsdrucksensor
- 23: Lenkmomentsensor
- 24: Lenkung
- 25: Lenkwinkelsensor
- 26: Lenkratensensor
- 37: Referenz-Kennfeld
- 38: Pfeil
- 39: Pfeil
- 40: Block
- 41: Pfeil
- 42: Block
- 43: Pfeil
- 44: Pfeil
- 45: Sensoreinrichtung
- 46: Pfeil
- 47: Pfeil
- 48: Block
- 49: Block
- 50: Pfeil
- 51: Block
- 51: Block
- 52: Block
- 53: Block
- 54: Block
- 55: Pfeil
- 56: Block
- dM: Differenz
- L: Lenkachse
- m_flag: Zustandswert
- G: Schwellenwert

## Patentansprüche

1. Verfahren zum Klassifizieren eines Fahrzustands eines Fahrzeugs (1), bei welchem mittels einer elektronischen Recheneinrichtung (!7):
- wenigstens ein Ist-Drehmomentwert (46) ermittelt wird, welcher ein aktuelles, in einer Lenkung (24) des Fahrzeugs (1) wirkendes Lenkmoment charakterisiert;
- wenigstens ein Ist-Winkelwert ermittelt wird, welcher einen aktuellen Rollwinkel des Fahrzeugs (2) charakterisiert;
- wenigstens ein Ist-Geschwindigkeitswert ermittelt wird, welcher eine aktuelle Fahrgeschwindigkeit des Fahrzeugs (2) charakterisiert und mit dem zugehörigen Ist-Winkelwert ein Ist-Wertepaar bildet;
- in Abhängigkeit von dem Ist-Wertepaar aus einem Referenz-Kennfeld (37), welches mehrere Referenz-Winkelwerte, mehrere Referenz-Geschwindigkeitswerte und mehrere Referenz-Drehmomentwerte umfasst und einem jeweiligen Referenz-Wertepaar, welches genau einen der Referenz-Winkelwerte und genau einen der Referenz-Geschwindigkeitswerte umfasst, genau einen der Referenz-Drehmomentwerte zuordnet, eines der Referenz-Wertepaare als zu dem Ist-Wertepaar gehörendes Wertepaar ausgewählt wird;
- der dem ausgewählten Referenz-Wertepaar zugeordnete Referenz-Drehmomentwert (50) ermittelt wird;
- der ermittelte Referenz-Drehmomentwert (50) mit dem ermittelten Ist-Drehmomentwert (46) verglichen wird, wodurch eine Differenz (dM) zwischen dem ermittelten Referenz-Drehmomentwert (50) und dem ermittelten Ist-Drehmomentwert (46) ermittelt wird; und
- zum Klassifizieren des Fahrzustands der Fahrzustand in Abhängigkeit von der Differenz (dM) einer von mehreren vorgegebenen Klassen (K12, K2, K3) zugeordnet wird.

2. Verfahren nach Anspruch 1,
**dadurch gekennzeichnet, dass**
mittels der elektronischen Recheneinrichtung (17) in Abhängigkeit von wenigstens einer mittels einer Erfassungseinrichtung (45) des Fahrzeugs (1) gemessenen und durch den Fahrzustand beeinflussten Messgröße wenigstens ein den Fahrzustand charakterisierender Zustandswert (m_flag) ermittelt wird, wobei zum Klassifizieren des Fahrzustands der Fahrzustand auch in Abhängigkeit von dem Zustandsparameter (m_flag) der einen Klasse zugeordnet wird.

3. Verfahren nach Anspruch 2,
**dadurch gekennzeichnet, dass**:
- zum Klassifizieren des Fahrzustands dann, wenn der Zustandsparameter (m_flag) einen ersten Wert aufweist und die Differenz (dM) kleiner als ein vorgegebener Schwellenwert (G) ist, der Fahrzustand der einen Klasse (K1) als erster Klasse (K1) zugeordnet wird;
- zum Klassifizieren des Fahrzustands dann, wenn der Zustandsparameter (m_flag) den ersten Wert aufweist und die Differenz (dM) größer oder gleich dem vorgegebenen Schwellenwert (G) ist, der Fahrzustand einer von der ersten Klasse (K1) unterschiedlichen, zweiten der Klassen (K1, K2, K3) zugeordnet wird; und
- zum Klassifizieren des Fahrzustands dann, wenn der Zustandsparameter (m_flag) einen von dem ersten Wert unterschiedlichen zweiten Wert aufweist, der Fahrzustand unabhängig von der Differenz (dM) einer von der ersten Klasse (K1) und von der zweiten Klasse (K2) unterschiedlichen, dritten der Klassen (K1, K2, K3) zugeordnet wird.

4. Verfahren nach Anspruch 2 oder 3,
**dadurch gekennzeichnet, dass**
die Messgröße:
- die Fahrgeschwindigkeit umfasst oder charakterisiert; und/oder
- den Rollwinkel umfasst oder charakterisiert; und/oder
- eine zeitliche Ableitung des Rollwinkels umfasst oder charakterisiert; und/oder
- eine in Fahrzeuglängsrichtung des Fahrzeugs verlaufende Beschleunigung des Fahrzeugs umfasst oder charakterisiert; und/oder
- eine in Fahrzeugquerrichtung des Fahrzeugs (1) verlaufende Beschleunigung des Fahrzeugs (1) umfasst oder charakterisier.

5. Verfahren nach einem der vorhergehenden Ansprüche,
**dadurch gekennzeichnet, dass**
mittels der elektronischen Recheneinrichtung (17) der Ist-Drehmomentwert ermittelt wird, indem mittels der elektronischen Recheneinrichtung (17):
- wenigstens ein erster Ausgangswert (43) ermittelt wird, welcher wenigstens einen in der Lenkung (24) wirkenden, dynamischen Lenkmomentenanteil und einen in der Lenkung (24) wirkenden, stationären Lenkmomentenanteil charakterisiert;
- wenigstens ein zweiter Ausgangswert (47) ermittelt wird, welcher bezogen auf den wenigstens einen in der Lenkung (24) wirkenden, dynamischen Lenkmomentenanteil und den in der Lenkung (24) wirkenden, stationären Lenkmomentenanteil ausschließlich den wenigstens einen in der Lenkung (24) wirkenden, dynamischen Lenkmomentenanteil charakterisiert; und
- der Ist-Drehmomentwert (46) in Abhängigkeit von den Ausgangswerten (43, 47) ermittelt wird.

6. Verfahren nach Anspruch 5,
**dadurch gekennzeichnet, dass**
der zweite Ausgangswert (47) mittels der elektronischen Recheneinrichtung (17) berechnet wird in Abhängigkeit von:
- einer Drehzahl des Fahrzeugrads (2) und/oder wenigstens eines weiteren Fahrzeugrads (3) des Fahrzeugs (1); und/oder
- einer Rollrate des Fahrzeugs (1); und/oder
- einer Rollbeschleunigung des Fahrzeugs (1); und/oder
- einer Gierbeschleunigung des Fahrzeugs (1); und/oder
- einer Lenkwinkelrate des Fahrzeugs (1); und/oder
- einer Verzögerung des Fahrzeugs (1); und/oder
- einem Druck in wenigstens einer Radbremse des Fahrzeugs und/oder
- einem Kreiselmoment des Fahrzeugs (1).

7. Verfahren nach einem der vorhergehenden Ansprüche,
**dadurch gekennzeichnet, dass**
mittels einer Erfassungseinrichtung (45) des Fahrzeugs (1) ein in der Lenkung (24) wirkendes Drehmoment als das Lenkmoment erfasst wird, wobei der Ist-Drehmomentwert (46) in Abhängigkeit von dem erfassten Drehmoment ermittelt wird.

8. Vorrichtung nach Anspruch 7 in dessen Rückbezug auf Anspruch 5 oder 6,
**dadurch gekennzeichnet, dass**
der erste Ausgangswert (43) in Abhängigkeit von dem mittels der Sensoreinrichtung (45) erfassten Drehmoment ermittelt wird.

9. Verfahren nach einem der vorhergehenden Ansprüche,
**dadurch gekennzeichnet, dass**
mittels der elektronischen Recheneinrichtung (17) wenigstens ein Einflusswert, welcher einen Einfluss einer Relativposition zwischen dem Fahrzeug und einer das Fahrzeug (1) nutzenden Person auf das aktuell in der Lenkung (24) des Fahrzeugs (1) wirkende Lenkmoment charakterisiert, ermittelt wird, indem mittels der elektronischen Recheneinrichtung (17):
- wenigstens Positionswert ermittelt wird, welcher eine mittels einer Sensoreinrichtung (45) erfasste und durch die Relativposition zwischen der das Fahrzeug (1) nutzenden Person (P) und dem Fahrzeug (1) beeinflusste Erfassungsgröße charakterisiert; und
- in Abhängigkeit von dem Positionswert der Einflusswert ermittelt wird, wobei der Ist-Drehmomentwert in Abhängigkeit von dem Einflusswert ermittelt wird.

10. Verfahren nach Anspruch 9,
**dadurch gekennzeichnet, dass**
mittels der Sensoreinrichtung (45) die Erfassungsgröße erfasst wird.

11. Verfahren nach Anspruch 10,
**dadurch gekennzeichnet, dass**
als zumindest ein Teil der Sensoreinrichtung (45) eine Sensoreinrichtung (45) des Fahrzeugs (1) verwendet wird.

12. Verfahren nach Anspruch 10 oder 11,
**dadurch gekennzeichnet, dass**
als zumindest ein Teil der Sensoreinrichtung (45) eine an der Person angeordnete Sensoreinrichtung verwendet wird.

13. Verfahren nach einem der Ansprüche 10 bis 12,
**dadurch gekennzeichnet, dass**
als zumindest ein Teil der Sensoreinrichtung (45) eine an wenigstens einem Kleidungsstück der Person angeordnete Sensoreinrichtung verwendet wird.

14. Verfahren nach einem der vorhergehenden Ansprüche,
**dadurch gekennzeichnet, dass**
das Fahrzeug (1) als ein einspuriges Zweirad ausgebildet ist.

15. Fahrzeug (1), welches zum Durchführen eines Verfahrens nach einem der vorhergehenden Ansprüche ausgebildet ist.
